# EUROPEAN PATENT SPECIFICATION

(11) **EP 3 805 056 B1**
(45) Date of publication and mention of the grant of the patent: **20.07.2022**
(21) Application number: 19839941.2
(22) Date of filing: 28.06.2019
(51) Int. Cl.: B60S 1/52, B60S 1/66, B05B 1/10

(54) **DEVICE AND METHOD FOR QUICKLY ADJUSTING VEHICLE GLASS WATER NOZZLE**
VORRICHTUNG UND VERFAHREN ZUM SCHNELLEN VERSTELLEN EINER WASSERDÜSE FÜR FAHRZEUGGLASSCHEIBEN
DISPOSITIF ET PROCÉDÉ DE RÉGLAGE RAPIDE D'UNE BUSE D'EAU POUR VERRE DE VÉHICULE

(30) Priority: 26.07.2018 CN 201810834349
(43) Date of publication of application: 14.04.2021
(73) Proprietor: Guangzhou Chengxing Zhidong Motors Technology Co., Ltd., Guangzhou, Guangdong 510700 (CN); Guangzhou Xiaopeng Motors Technology Co., Ltd., Tianhe District Guangzhou Guangdong (CN)
(72) Inventor: LUO, Mingjun, Guangzhou, Guangdong 510000 (CN); HUANG, Jinteng, Guangzhou, Guangdong 510000 (CN); FENG, Yanlong, Guangzhou, Guangdong 510000 (CN)
(74) Representative: Lin Chien, Mon-Yin
(86) International application number: PCT/CN2019/093480
(87) International publication number: WO 2020/019931

(56) References cited:
- CN-A- 107 757 560
- CN-A- 109 080 589
- CN-U- 201 592 699
- CN-U- 202 923 611
- CN-U- 202 923 611
- DE-A1- 19 819 964
- DE-A1- 19 819 964
- JP-A- 2003 175 807

## Description

### TECHNICAL FIELD

The present disclosure relates to vehicle equipment technologies, and more particularly, to a device and a method for quickly adjusting a vehicle glass water nozzle.

### BACKGROUND

A Vehicle glass water nozzle is usually disposed at a position on an engine room cover. For columnar nozzles, two jets at the left and right of the nozzle jet water, a jetting angle of the jet is required to be adjusted so that the water jetted out can reach a proper position of a windshield, thereby making a wiper effectively clean the windshield. In the production line of vehicle factories that use columnar nozzles, it is necessary to adjust the jetting angle of the nozzle. Current method for adjusting the jetting angle of the nozzle are as follows: first it is checked whether the jetting water reaches an appropriate position of the windshield, if it is not appropriate, the jet of the nozzle is found and then a steel needle is inserted into a jetting hole for fine adjustment. Due to the fine adjustment of the jetting hole causes a very obviously change of the position where the jetting water falls on the windshield, and the manual adjustment of the angle is quite random, so that it may need many times of adjustments to make the glass water jetted out from the nozzle falls on the appropriate position of the windshield, which is time-consuming and laborious. CN 202 923 611 U shows a prior art device and method for adjusting a vehicle glass water nozzle.

### SUMMARY

The disclosure aims to provides a device and a method for quickly adjusting a vehicle glass water nozzle, to realize an accurate adjustment for a jet direction of a nozzle by limiting a direction of an adjusting body, the device can be used as an adjusting tool for the nozzle on a vehicle production line.

Technical solutions of the disclosure to solve its technical problem are as follows. The disclosure provides a device for quickly adjusting a vehicle glass water nozzle. The device includes:
a nozzle direction adjusting body;
a position control assembly, disposed on the nozzle direction adjusting body, wherein the position control assembly comprises a first position control subassembly, a second position control subassembly and a subassembly driving mechanism, the subassembly driving mechanism is configured to adjust the position of the first position control subassembly and/or the position of the second position control subassembly, thereby changing the position of the intersection point of edges of the first and the second position control subassembly; and
an adjusting body, configured to abut on the intersection point of edges of the first and the second position control subassembly, wherein an end of the adjusting body is configured to be connected with a jet of a nozzle and thereby to adjust a direction of the jet of the nozzle.

As an improvement of the technical solution, the jet is disposed on the nozzle in the form of a spherical pair.

As an improvement of the technical solution, the nozzle direction adjusting body has a concave surface matched with the jet, the nozzle direction adjusting body is provided with an adjusting channel on the concave surface, and the adjusting body passes through the adjusting channel and is connected with the nozzle.

As an improvement of the technical solution, the nozzle direction adjusting body is provided with two installation grooves on two sides of the adjusting channel, the first and the second position control subassembly are detachable assembled in the installation grooves, respectively, and the intersection point of edges of the first and the second position control subassembly is formed in the adjusting channel.

As an improvement of the technical solution, the subassembly driving mechanism comprises a first subassembly driving mechanism corresponding to the first position control subassembly and a second subassembly driving mechanism corresponding to the second position control subassembly, each of the first and the second subassembly driving mechanism comprises a fixed block disposed on the nozzle direction adjusting body, a screw rod threaded fit with the fixed block, and a force transmitting member for connecting the screw rod with the corresponding one of the position control subassemblies.

As an improvement of the technical solution, the force transmitting member comprises a fixed base and a fixed cover, a boss of the screw rod is arranged in a space formed by the fixed base and the fixed cover, and the boss is rotatable relative to the space.

As an improvement of the technical solution, the installation grooves comprises a vertical installation groove and a horizontal installation groove, the first position control subassembly is engaged in the vertical installation groove, the vertical installation groove is provided with a vertical guide groove, and the first position control subassembly is provided with a vertical guide bar matched with the vertical guide groove; the second position control subassembly is engaged in the horizontal installation groove, the horizontal installation groove is provided with a horizontal guide groove, and the second position control subassembly is provided with a horizontal guide bar matched with the horizontal guide groove.

As an improvement of the technical solution, the periphery of the first position control subassembly defines a first inclined surface inclined to the second position control subassembly, and the periphery of the second position control subassembly defines a second inclined surface inclined to the first position control subassembly.

As an improvement of the technical solution, the nozzle direction adjusting body is provided with positioning grooves, the positioning grooves each are positioned on a side of a corresponding one of the installation groove, and the first and the second subassembly driving mechanism each are engaged in a corresponding one of the positioning grooves.

The disclosure further provides a method for quickly adjusting a vehicle glass water nozzle. The method includes the following steps:
S10: providing the device of claim 1 and matching a concave surface of a nozzle direction adjusting body with the nozzle;
S20: adjusting the position of a first position control subassembly and/or the position of a second position control subassembly through a subassembly driving mechanism disposed on the nozzle direction adjusting body, thereby changing the position of the intersection point of the edge of the first position control subassembly and the edge of the second position control subassembly;
S30: connecting an end of an adjusting body with the nozzle of the jet, adjusting a direction of the jet of the nozzle through the adjusting body, and abutting the adjusting body against the intersection point of the edge of the first position control subassembly and the edge of the second position control subassembly; S40: removing the adjusting body and the nozzle direction adjusting body; and
S50: repeating steps S10~S40 until the direction of the nozzle of the jet is qualified.

Technical effects of the disclosure are as follows. The disclosure adjusts the position of the intersection point of edges of the first and the second position control subassembly through the position control assembly, and further drives the jet of the nozzle to adjust its direction by making the adjusting body abut on the intersection point position, and finally realizes a quickly adjustment of the vehicle glass water jet. When it is applied in the production line, it can improve the production efficiency, improve the working conditions of workers, reduce the labor intensity, and ensure the accuracy of the adjusting.

### BRIEF DESCRIPTION OF THE DRAWINGS

The disclosure is further explained in accompany with the drawings as follows.
FIG. 1 is a schematic structural diagram of a device for quickly adjusting vehicle glass water nozzle according to an embodiment of the disclosure.
FIG. 2 is a schematic diagram of a position control assembly from a first perspective, according to an embodiment of the disclosure.
FIG. 3 is a schematic diagram showing a principle for adjusting a direction of a jet of the position control assembly according to an embodiment of the disclosure.
FIG. 4 is a schematic diagram of the position control assembly from a second perspective, according to an embodiment of the disclosure.
FIG. 5 is a schematic diagram of a nozzle direction adjusting body from a first perspective, according to an embodiment of the present disclosure.
FIG. 6 is a schematic diagram of the nozzle direction adjusting body from a second perspective, according to an embodiment of the present disclosure.
FIG. 7 is a schematic diagram of the nozzle direction adjusting body from a third perspective, according to an embodiment of the present disclosure.
FIG. 8 is a schematic diagram of the nozzle direction adjusting body from a fourth perspective, according to an embodiment of the present disclosure.
FIG. 9 is a schematic diagram showing a connection of a screw rod and a force transmitting member according to an embodiment of the present disclosure.

### DETAILED DESCRIPTION OF EMBODIMENTS

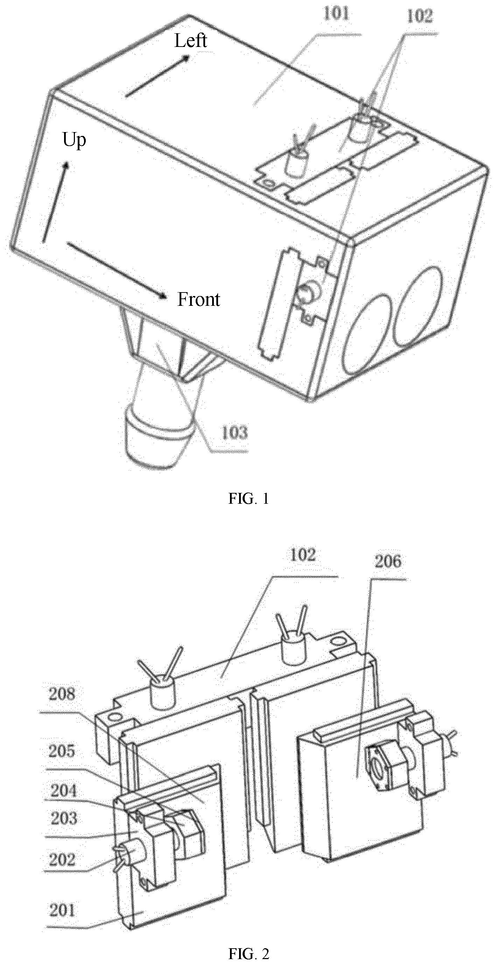

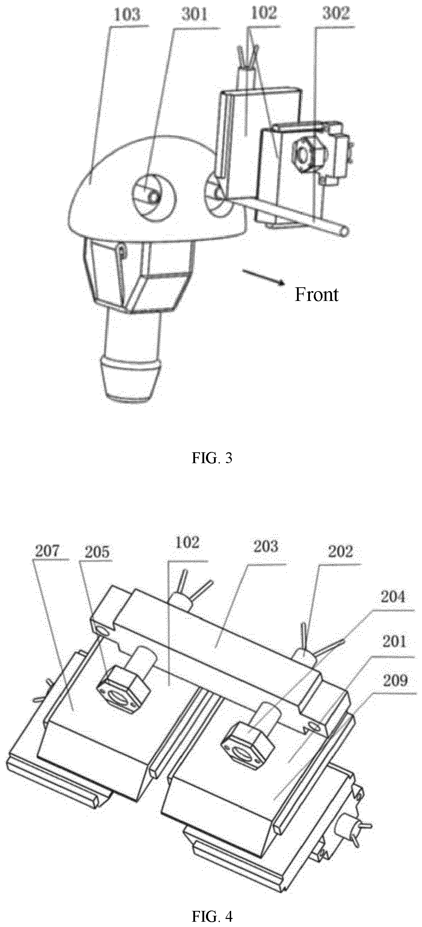

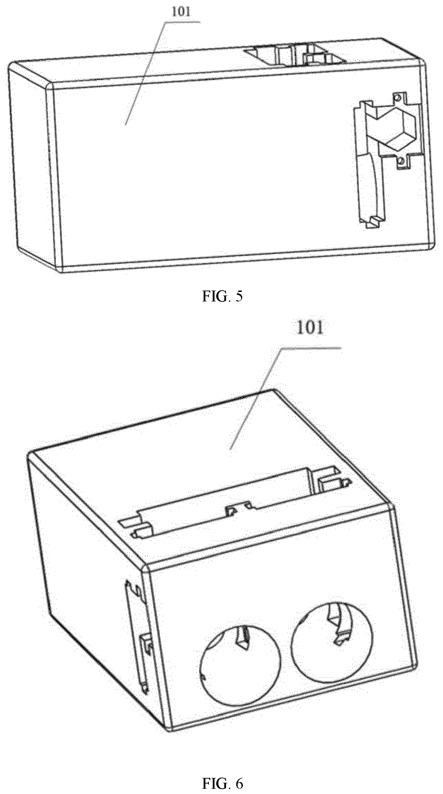

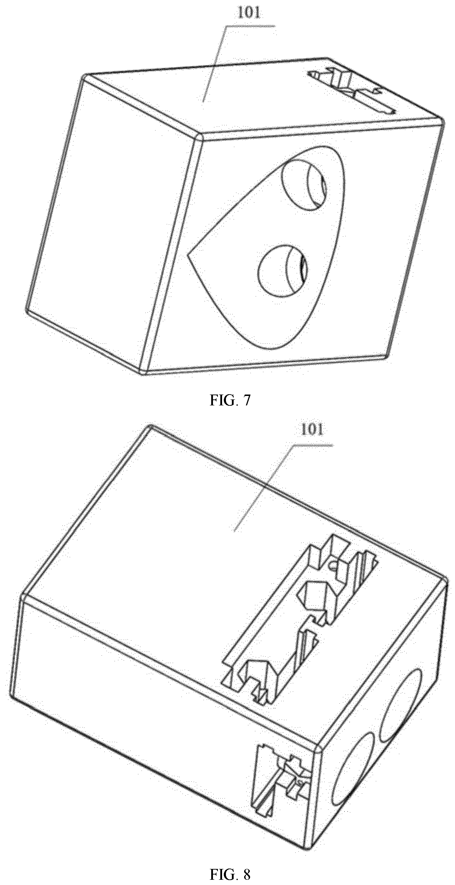

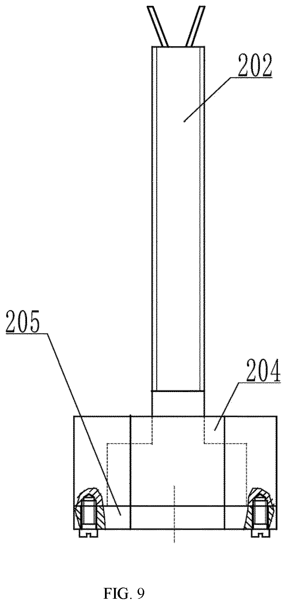

FIG. 1 to FIG. 9 illustrate detailed structure of a preferred embodiment of the disclosure. Structural features of every component of the disclosure are described in detail below.

The disclosure provides a device for quickly adjusting a vehicle glass water nozzle, which includes a nozzle direction adjusting body 101, a position control assembly 102, and an adjusting body 302.

The nozzle direction adjusting body 101 serves as a carrier of the device, its shape can be, but not limited to, rectangular, circular, or irregular.

The position control assembly 102 is disposed on the nozzle direction adjusting body 101. The position control assembly 102 includes a first position control subassembly, a second position control subassembly and a subassembly driving mechanism, the subassembly driving mechanism is configured to adjust the position of the first position control subassembly and/or the position of the second position control subassembly, thereby changing the position of the intersection point of edges of the first and the second position control subassembly. The subassembly driving mechanism can adopt, but not limited to, driving manners of threaded fitting, cylinder driving, leadscrew nut mechanism driving, and the like.

The adjusting body 302 is configured to abut on the intersection point of edges of the first and the second position control subassembly. An end of the adjusting body 302 is configured to be connected with a jet 301 of a nozzle 103 and adjust a direction of the jet 301 of the nozzle 103. The adjusting body 302 has a slender shape feature, the end of the adjusting member 302 can be sleeved outside the jet 301 or inserted into the jet 301 to realize the connection with the jet 301, In a preferred embodiment, the adjusting body 302 can be a steel needle.

The jet 301 is disposed on the nozzle 103 in the form of spherical pair, the adjusting body 302 can adjust the direction of the jet 301 after being connected with the jet 301.

The nozzle direction adjusting body 101 has a concave surface matched with the nozzle 301, the nozzle direction adjusting body 101 can quickly cooperated with a top portion of the nozzle 103 through the concave surface. The nozzle direction adjusting body 101 is provided with an adjusting channel on the concave surface, and the adjusting body 302 passes through the adjusting channel and is connected with the nozzle 301.

The nozzle direction adjusting body 101 is provided with two installation grooves on two sides of the adjusting channel. The first and the second position control subassembly can both in the form of a guide block 201, and the first and the second position control subassembly are slidably engaged in the installation grooves, correspondingly. Edges of the first and the second position control subassembly form an intersection point located in the adjusting channel. The shortest distance between side surfaces of the first and the second position control subassembly is 0.1mm, and the maximum movement range of the first and the second position control subassembly is 8mm. Within the movement range, the area of the jet 301 is located in the area corresponding to where is swept by a tip line of the position control subassembly.

The subassembly driving mechanism includes a first subassembly driving mechanism corresponding to the first position control subassembly and a second subassembly driving mechanism corresponding to the second position control subassembly. The first subassembly driving mechanism is configured to drive and adjust the first position control subassembly, and the second subassembly driving mechanism is configured to drive and adjust the second position control subassembly. The disclosure preferably applies a manner of screw driving. Each of the first and the second subassembly driving mechanism includes a fixed block 203 disposed on the nozzle direction adjusting body 101, a screw rod 202 threaded fit with the fixed block 203, and a force transmitting member 204 connecting the screw rod 202 with a corresponding one of the position control subassemblies. The screw rod 202 can be driven by a motor, or can be manually adjusted with a handle. When the screw rod 202 is rotated by the handle, the screw rod 202 and the fixed block 203 are threadedly engaged, and thereby driving the corresponding position control subassembly to move through the force transmitting member 204.

The force transmitting member 204 can realize a force transmission between the screw rod 202 and the corresponding one of the position control subassemblies. Preferably, the force transmitting member 204 includes a fixed base and a fixed cover 205, a boss of the screw rod 202 is arranged in a space formed by the fixed base and the fixed cover 205, and the boss is rotatable relative to the space.

Movement directions of the first and second position control subassembly form an included angle, which is preferably a right angle. That is, the installation grooves include a vertical installation groove and a horizontal installation groove, the first position control subassembly is engaged in the vertical installation groove, there is a vertical guide groove defined in the vertical installation groove, and the first position control subassembly is provided with a vertical guide bar matched with the vertical guide groove. The first position control subassembly and an inner surface of the vertical installation groove form a sliding pair, which is configured for guiding and limiting to the first position control subassembly. The second position control subassembly is engaged in the horizontal installation groove, the horizontal installation groove is provided with a horizontal guide groove, and the second position control subassembly is provided with a horizontal guide bar matched with the horizontal guide groove. The second position control subassembly and an inner surface of the horizontal installation groove form a sliding pair, which is used for guiding and limiting to the second position control subassembly.

The edge of the first position control subassembly defines a first inclined surface inclined to the second position control subassembly, and the edge of the second position control subassembly defines a second inclined surface inclined to the first position control subassembly. Boundaries of the first and second inclined surfaces form the intersection point. The design of inclined surfaces can improve the accuracy of the intersection point positioning of the adjusting body 302.

The nozzle direction adjusting body 101 is provided with positioning grooves, the positioning grooves each are positioned on a side of a corresponding one of the installation grooves, and the first and the second subassembly driving mechanism are installed in a corresponding one of the positioning grooves. The first and the second subassembly driving mechanism are installed in the first and the second subassembly driving mechanism through their corresponding fixed block 203, respectively. The fixed block 203 is fixed in the corresponding positioning groove with one or more screws, and the fixed block and the nozzle direction adjusting body 101 may provide a flat surface.

In the disclosure, the nozzle 103 may include one or more jets 301, correspondingly, one or more set of position control subassembly 102 may be disposed on the nozzle direction adjusting body 101. For example, the nozzle 103 includes two jets 301, the two jets 301 are coupled to two sides in front of the nozzle 103 in the form of spherical pairs, and there are two sets of position control assembly 102, wherein the first set includes a left front position control subassembly 206 and a left rear position control subassembly 207, and the second set includes a right front position control subassembly 208 and a right rear position control subassembly 209. The left front position control subassembly 206 and the right front position control subassembly 208 are horizontally symmetrically arranged on two sides of the nozzle direction adjusting body 101, and the left rear position control subassembly 207 and the right rear position control subassembly 209 are vertically arranged above the nozzle direction adjusting body 101.

The disclosure further provides a method for quickly adjusting a vehicle glass water jet, the method includes the following steps.

Step S10: a jetting direction of the jet 301 of the nozzle 103 is checked qualified or not, and if not, the concave surface of the nozzle direction adjusting body 101 is made to be matched with the nozzle 103, so that a relative position of the nozzle direction adjusting body 101 and the nozzle 103 is fixed.

Step S20: the position of the first position control subassembly and/or the position of the second position control subassembly are adjusted through the subassembly driving mechanism disposed on the nozzle direction adjusting body 101. When adjusting, the handle of the screw rod 202 is rotated to change the position of the intersection point of the edges of the first and the second position control subassembly.

Step S30: the end of the adjusting body 302 is connected with the nozzle 301 of the jet 103, the jet 301 of the nozzle is driven by the adjusting body 302 to adjust its direction, thereby to control the jetting direction of the jet 301. The adjusting body 302 is abutted against the intersection point of the edge of the first position control subassembly and the edge of the second position control subassembly.

Step S40: the adjusting body 302 and the nozzle direction adjusting body 101 are disassembled.

Step S50: the steps S10~S40 are repeated until the jetting direction of the jet 301 of the nozzle 103 is qualified. The method of checking whether the jetting direction of the jet 301 of the nozzle 103 is qualified may be: the jet 301 of the nozzle 103 is enabled to jet water, and it is checked whether the water jetted out falls on the appropriate position of the windshield.

When the nozzle 103 has a plurality of jets 301, each of the plurality of jets 301 is adjusted by a corresponding subassembly driving mechanism disposed on the nozzle direction adjusting body 101.

Of course, the disclosure is not limited to the above-mentioned embodiments. The scope is defined by the claims of this application.

## Claims

1. A device for quickly adjusting a vehicle glass water nozzle, **characterized by**, comprising:
a nozzle direction adjusting body (101);
a position control assembly (102), disposed on the nozzle direction adjusting body (101), wherein the position control assembly (102) comprises a first position control subassembly (206, 208), a second position control subassembly (207, 209) and a subassembly driving mechanism, the subassembly driving mechanism being configured to adjust the position of the first position control subassembly (206, 208) and/or the position of the second position control subassembly (207, 209), thereby changing the position of an intersection point of edges of the first and the second position control subassembly; and
an adjusting body (302), configured to abut on an intersection point of edges of the first and the second position control subassemblies, wherein an end of the adjusting body (302) is configured to be connected with a jet (301) of a nozzle (103) and thereby adjust a direction of the jet (301) of the nozzle (103).

2. The device of claim 1, wherein the jet (301) is disposed on the nozzle (103) in the form of a spherical pair.

3. The device of claim 1, wherein the nozzle direction adjusting body (101) has a concave surface matching with the nozzle (103), the nozzle direction adjusting body (101) is provided with an adjusting channel on the concave surface, and the adjusting body (302) passes through the adjusting channel and is connected with the nozzle (103).

4. The device of claim 3, wherein the nozzle direction adjusting body (101) is provided with two installation grooves on two sides of the adjusting channel, the first and the second position control subassembly are detachably assembled in the installation grooves, respectively, and the intersection point of edges of the first and the second position control subassembly is formed in the adjusting channel.

5. The device of claim 4, wherein the subassembly driving mechanism comprises a first subassembly driving mechanism corresponding to the first position control subassembly (206, 208) and a second subassembly driving mechanism corresponding to the second position control subassembly (207, 209), each of the first and the second subassembly driving mechanism comprises a fixed block (203) disposed on the nozzle direction adjusting body (101), a screw rod (202) threaded fits with the fixed block (203), and a force transmitting member (204) connects the screw rod (202) with a corresponding one of the position control subassemblies.

6. The device of claim 5, wherein the force transmitting member (204) comprises a fixed base and a fixed cover (205), a boss of the screw rod (202) is arranged in a space formed by the fixed base and the fixed cover (205), and the boss is rotatable relative to the space.

7. The device of claim 4, wherein the installation grooves comprise a vertical installation groove and a horizontal installation groove, the first position control subassembly (206, 208) engaged in the vertical installation groove, the vertical installation groove is provided with a vertical guide groove, and the first position control subassembly (206, 208) is provided with a vertical guide bar matching with the vertical guide groove; the second position control subassembly (207, 209) is engaged in the horizontal installation groove, the horizontal installation groove is provided with a horizontal guide groove, and the second position control subassembly (207, 209) is provided with a horizontal guide bar matching with the horizontal guide groove.

8. The device of claim 1, wherein the edge of the first position control subassembly (206,208) defines a first inclined surface inclined to the second position control subassembly (207,209) and the edge of the second position control subassembly (207, 209) defines a second inclined surface inclined to the first position control subassembly (206,208).

9. The device of claim 5, wherein the nozzle direction adjusting body (101) is provided with positioning grooves, the positioning grooves each are positioned on a side of a corresponding one of the installation grooves, and the first and the second subassembly driving mechanism each are engaged in a corresponding one of the positioning grooves.

10. The device of claim 5, wherein the screw rod (202) is manually adjusted with a handle.

11. The device of any one of claims 1-10, wherein the movement directions of the first and the second position control subassembly form a right angle.

12. The device of any one of claims 1-10, wherein the shortest distance between side surfaces of the first and the second position control subassembly is 0.1mm.

13. The device of any one of claims 1-10, wherein the end of the adjusting body (302) is sleeved outside the jet (301) when connected with the jet (301).

14. The device of any one of claims 1-10, wherein the end of the adjusting body (302) is inserted into the jet (301) when connected with the jet (301).

15. A method for quickly adjusting a vehicle glass water nozzle, **characterized by**, comprising; S10: providing the device of claim 1, and matching a concave surface of the nozzle direction adjusting body (101) with the nozzle (103); S20: adjusting the position of the first position control subassembly (206, 208) and/or the position of the second position control subassembly (207, 209) through the subassembly driving mechanism disposed on the nozzle direction adjusting body (101), thereby changing the position of an intersection point of the edge of the first position control subassembly (206, 208) and the edge of the second position control subassembly (207,209); S30: connecting the end of the adjusting body (302) with the jet (301) of the nozzle (103), adjusting a jetting direction of the jet (301) of the nozzle (103) through the adjusting body (302), and abutting the adjusting body (302) against the intersection point of the edge of the first position control subassembly (206, 208) and the edge of the second position control subassembly (207, 209); S40: removing the adjusting body (302) and the nozzle direction adjusting body (101); and S50: repeating steps S10~S40 until the jetting direction of the jet (301) of the nozzle (103) is qualified.

## Patentansprüche

1. Vorrichtung zur Schnellverstellung eines Fahrzeug-Scheibenwaschwassersprühkopfs, **dadurch gekennzeichnet, dass** sie Folgendes umfasst:
einen Sprühkopfrichtungs-Verstellkörper (101);
eine Positionssteuerbaugruppe (102), die an dem Sprühkopfrichtungs-Verstellkörper (101) angeordnet ist, wobei die Positionssteuerbaugruppe (102) eine erste Positionssteuerunterbaugruppe (206, 208), eine zweite Positionssteuerunterbaugruppe (207, 209) und einen Unterbaugruppenantriebsmechanismus umfasst, wobei der Unterbaugruppenantriebsmechanismus zum Verstellen der Position der ersten Positionssteuerunterbaugruppe (206, 208) und/oder der Position der zweiten Positionssteuerunterbaugruppe (207, 209) eingerichtet ist, wodurch die Position eines Schnittpunkts der Kanten der ersten und der zweiten Positionssteuerunterbaugruppe geändert wird; und
einen Verstellkörper (302), der zum Anliegen an einem Schnittpunkt der Kanten der ersten und der zweiten Positionssteuerunterbaugruppen eingerichtet ist, wobei ein Ende des Verstellkörpers (302) zum Verbinden mit einer Düse (301) eines Sprühkopfs (103) und somit zum Verstellen einer Richtung der Düse (301) des Sprühkopfs (103) eingerichtet ist.

2. Die Vorrichtung nach Anspruch 1, wobei die Düse (301) in Form eines Kugelpaares an dem Sprühkopf (103) angeordnet ist.

3. Die Vorrichtung nach Anspruch 1, wobei der Sprühkopfrichtungs-Verstellkörper (101) eine auf den Sprühkopf (103) abgestimmte konkave Oberfläche aufweist, wobei der Sprühkopfrichtungs-Verstellkörper (101) mit einem Verstellkanal an der konkaven Oberfläche versehen ist, und wobei der Verstellkörper (302) durch den Verstellkanal hindurchgeht und mit dem Sprühkopf (103) verbunden ist.

4. Die Vorrichtung nach Anspruch 3, wobei der Sprühkopfrichtungs-Verstellkörper (101) mit zwei Montagenuten an zwei Seiten des Verstellkanals versehen ist, wobei die erste und die zweite Positionssteuerunterbaugruppe jeweils abnehmbar in den Montagenuten montiert sind, und wobei der Schnittpunkt der Kanten der ersten und der zweiten Positionssteuerunterbaugruppe in dem Verstellkanal gebildet ist.

5. Die Vorrichtung nach Anspruch 4, wobei der Unterbaugruppenantriebsmechanismus einen ersten Unterbaugruppenantriebsmechanismus, der der ersten Positionssteuerunterbaugruppe (206, 208) zugeordnet ist, und einen zweiten Unterbaugruppenantriebsmechanismus, der der zweiten Positionssteuerunterbaugruppe (207, 209) zugeordnet ist, umfasst, wobei jeder des ersten und des zweiten Unterbaugruppenantriebsmechanismus einen festen Block (203), der an dem Sprühkopfrichtungs-Verstellkörper (101) angeordnet ist, eine Gewindestange (202) mit Gewindepassung zu dem festen Block (203) und ein Kraftübertragungselement (204), das die Gewindestange (202) mit einer zugeordneten Positionssteuerunterbaugruppe verbindet, umfasst.

6. Die Vorrichtung nach Anspruch 5, wobei das Kraftübertragungselement (204) eine feste Basis und eine feste Abdeckung (205) umfasst, wobei ein Vorsprung der Gewindestange (202) in einem durch die feste Basis und die feste Abdeckung (205) gebildeten Raum angeordnet ist, und wobei der Vorsprung relativ zu dem Raum drehbar ist.

7. Die Vorrichtung nach Anspruch 4, wobei die Montagenuten eine vertikale Montagenut und eine horizontale Montagenut umfassen, wobei die erste Positionssteuerunterbaugruppe (206, 208) in der vertikalen Montagenut eingerastet ist, wobei die vertikale Montagenut mit einer vertikalen Führungsnut versehen und die erste Positionssteuerunterbaugruppe (206, 208) mit einer auf die vertikale Führungsnut abgestimmten vertikalen Führungsstange versehen ist; wobei die zweite Positionssteuerunterbaugruppe (207, 209) in der horizontalen Montagenut eingerastet ist, wobei die horizontale Montagenut mit einer horizontalen Führungsnut versehen und die zweite Positionssteuerunterbaugruppe (207, 209) mit einer auf die horizontale Führungsnut abgestimmten horizontalen Führungsstange versehen ist.

8. Die Vorrichtung nach Anspruch 1, wobei die Kante der ersten Positionssteuerunterbaugruppe (206, 208) eine erste schräge Fläche, die gegen die zweite Positionssteuerunterbaugruppe (207, 209) hin geneigt ist, definiert, während die Kante der zweiten Positionssteuerunterbaugruppe (207, 209) eine zweite schräge Fläche, die gegen die erste Positionssteuerunterbaugruppe (206, 208) hin geneigt ist, definiert.

9. Die Vorrichtung nach Anspruch 5, wobei der Sprühkopfrichtungs-Verstellkörper (101) mit Positioniernuten versehen ist, die jeweils an einer Seite einer zugeordneten Montagenut positioniert sind, wobei die erste und die zweite Positionssteuerunterbaugruppe jeweils in einer zugeordneten Positioniernut eingerastet sind.

10. Die Vorrichtung nach Anspruch 5, wobei die Gewindestange (202) manuell mit einem Griff eingestellt wird.

11. Die Vorrichtung nach einem der Ansprüche 1 bis 10, wobei die Bewegungsrichtungen der ersten und der zweiten Positionssteuerunterbaugruppe einen rechten Winkel einschließen.

12. Die Vorrichtung nach einem der Ansprüche 1 bis 10, wobei der kürzeste Abstand zwischen Seitenflächen der ersten und der zweiten Positionssteuerunterbaugruppe 0,1 mm beträgt.

13. Die Vorrichtung nach einem der Ansprüche 1 bis 10, wobei das Ende des Verstellkörpers (302) außen auf der Düse (301) aufgeschoben ist, wenn es mit der Düse (301) verbunden ist.

14. Die Vorrichtung nach einem der Ansprüche 1 bis 10, wobei das Ende des Verstellkörpers (302) in der Düse (301) eingeführt ist, wenn es mit der Düse (301) verbunden ist.

15. Verfahren zur Schnellverstellung eines Fahrzeug-Scheibenwaschwassersprühkopfs, **dadurch gekennzeichnet, dass** es Folgendes umfasst:
S10: Überprüfen, ob eine Sprührichtung einer Düse (301) eines Sprühkopfs (103) geeignet ist; Bereitstellen der Vorrichtung nach Anspruch 1 und Abstimmen einer konkaven Oberfläche des Sprühkopfrichtungs-Verstellkörpers (101) auf den Sprühkopf (103), wenn dies nicht der Fall ist;
S20: Anpassen der Position der ersten Positionssteuerunterbaugruppe (206, 208) und/oder der Position der zweiten Positionssteuerunterbaugruppe (207, 209) über den Unterbaugruppenantriebsmechanismus, der an dem Sprühkopfrichtungs-Verstellkörper (101) angeordnet ist, wodurch die Position eines Schnittpunkts der Kante der ersten Positionssteuerunterbaugruppe (206, 208) und der Kante der zweiten Positionssteuerunterbaugruppe (207, 209) geändert wird;
S30: Verbinden des Endes des Verstellkörpers (302) mit der Düse (301) des Sprühkopfs (103), Anpassen einer Sprührichtung der Düse (301) des Sprühkopfs (103) über den Verstellkörper (302) und Abstützen des Verstellkörpers (302) gegen den Schnittpunkt der Kante der ersten Positionssteuerunterbaugruppe (206, 208) und der Kante der zweiten Positionssteuerunterbaugruppe (207, 209);
S40: Entfernen des Verstellkörpers (302) und des Sprühkopfrichtungs-Verstellkörpers (101); und
S50: Wiederholen der Schritte S10 bis S40, bis die Sprührichtung der Düse (301) des Sprühkopfs (103) geeignet ist.

## Revendications

1. Dispositif de réglage rapide d'une buse de liquide de lave-glace, **caractérisé en ce qu'**il comprend:
un corps de réglage de direction de buse (101);
un ensemble de commande de position (102), disposé sur le corps de réglage de direction de buse (101), l'ensemble de commande de position (102) comprenant un premier sous-ensemble de commande de position (206, 208), un deuxième sous-ensemble de commande de position (207, 209) et un mécanisme d'entraînement de sous-ensemble, le mécanisme d'entraînement de sous-ensemble étant configuré pour régler la position du premier sous-ensemble de commande de position (206, 208) et/ou la position du deuxième sous-ensemble de commande de position (207, 209), afin de modifier la position d'un point d'intersection des bords des premier et deuxième sous-ensembles de commande de position; et
un corps de réglage (302), configuré pour buter sur un point d'intersection des bords des premier et deuxième sous-ensembles de commande de position, une extrémité du corps de réglage (302) étant configurée de manière à être reliée à un jet (301) d'une buse (103), pour permettre de régler une direction du jet (301) de la buse (103).

2. Dispositif selon la revendication 1, dans lequel le jet (301) est disposé sur la buse (103) sous la forme d'une paire sphérique.

3. Dispositif selon la revendication 1, dans lequel le corps de réglage de direction de buse (101) présente une surface concave adaptée à la buse (103), le corps de réglage de direction de buse (101) étant doté d'un canal de réglage disposé sur la surface concave, et le corps de réglage (302) traversant le canal de réglage et étant relié à la buse (103).

4. Dispositif selon la revendication 3, dans lequel le corps de réglage de direction de buse (101) est doté de deux rainures d'installation situées sur deux côtés du canal de réglage, les premier et deuxième sous-ensembles de commande de position étant assemblés de manière détachable dans les rainures d'installation, respectivement, et le point d'intersection des bords des premier et deuxième sous-ensembles de commande de position étant formé dans le canal de réglage.

5. Dispositif selon la revendication 4, dans lequel le mécanisme d'entraînement de sous-ensemble comprend un premier mécanisme d'entraînement de sous-ensemble correspondant au premier sous-ensemble de commande de position (206, 208) et un deuxième mécanisme d'entraînement de sous-ensemble correspondant au deuxième sous-ensemble de commande de position (207, 209), chacun des premier et deuxième mécanismes d'entraînement de sous-ensemble comprend un bloc fixe (203) disposé sur le corps de réglage de direction de buse (101), une tige filetée (202) a un filetage correspondant au bloc fixe (203), et un élément de transmission de force (204) relie la tige filetée (202) à l'un des sous-ensembles de commande de position qui lui correspond.

6. Dispositif selon la revendication 5, dans lequel l'élément de transmission de force (204) comprend une base fixe et un capot fixe (205), une bosse de la tige filetée (202) est agencée dans un espace formé par la base fixe et le capot fixe (205), et la bosse est capable de tourner par rapport à l'espace.

7. Dispositif selon la revendication 4, dans lequel les rainures d'installation comprennent une rainure d'installation verticale et une rainure d'installation horizontale, le premier sous-ensemble de commande de position (206, 208) est engagé dans la rainure d'installation verticale, la rainure d'installation verticale est dotée d'une rainure de guidage verticale, et le premier sous-ensemble de commande de position (206, 208) est dotée d'une barre de guidage verticale adaptée à la rainure de guidage verticale; le deuxième sous-ensemble de commande de position (207, 209) est engagé dans la rainure d'installation horizontale, la rainure d'installation horizontale est dotée d'une rainure de guidage horizontale, et le deuxième sous-ensemble de commande de position (207, 209) est doté d'une barre de guidage horizontale associée à la rainure de guidage horizontale.

8. Dispositif selon la revendication 1, dans lequel le bord du premier sous-ensemble de commande de position (206, 208) définit une première surface inclinée qui s'incline vers le deuxième sous-ensemble de commande de position (207, 209), et le bord du deuxième sous-ensemble de commande de position (207, 209) définit une deuxième surface inclinée qui s'incline vers le premier sous-ensemble de commande de position.

9. Dispositif selon la revendication 5, dan lequel le corps de réglage de direction de buse (101) est doté de rainures de positionnement, chacune des rainures de positionnement est positionnée sur un côté d'une des rainures d'installation qui lui correspond, et chacun des premier et deuxième mécanismes d'entraînement de sous-ensemble est engagé dans une des rainures de positionnement qui lui correspond.

10. Dispositif selon la revendication 5, dans lequel la tige filetée (202) est réglée manuellement avec une manette.

11. Dispositif selon l'une quelconque des revendications 1-10, dans lequel les directions de mouvement des premier et deuxième sous-ensembles de commande de position forment un angle droit.

12. Dispositif selon l'une quelconque des revendications 1-10, dans lequel la plus courte distance entre les surfaces latérales des premier et deuxième sous-ensembles de commande de position est de 0,1 mm.

13. Dispositif selon l'une quelconque des revendications 1-10, dans lequel l'extrémité du corps de réglage (302) forme un manchon à l'extérieur du jet (301) lorsqu'elle est reliée au jet (301).

14. Dispositif selon l'une quelconque des revendications 1-10, dans lequel l'extrémité du corps de réglage (302) est insérée dans le jet (301) lorsqu'elle est reliée au jet (301).

15. Procédé de réglage rapide d'une buse de liquide de lave-glace, **caractérisé en ce qu'**il comprend les étapes consistant à:
S10: vérifier si une direction de projection d'un jet (301) d'une buse (103) est correcte, et si ce n'est pas le cas, mettre en place le dispositif selon la revendication 1, et associer une surface concave du corps de réglage de direction de buse (101) avec la buse (103);
S20: régler la position du premier sous-ensemble de commande de position (206, 208) et/ou la position du deuxième sous-ensemble de commande de position (207, 209) au moyen du mécanisme d'entraînement de sous-ensemble disposé sur le corps de réglage de direction de buse (101), afin de modifier la position d'un point d'intersection du bord du premier sous-ensemble de commande de position (206, 208) et du bord du deuxième sous-ensemble de commande de position (207, 209);
S30: relier l'extrémité du corps de réglage (302) au jet (301) de la buse (103), régler une direction de projection du jet (301) de la buse (103) au moyen du corps de réglage (302), et mettre le corps de réglage (302) en butée contre le point d'intersection du bord du premier sous-ensemble de commande de position (206, 208) et du bord du deuxième sous-ensemble de commande de position (207, 209);
S40: retirer le corps de réglage (302) et le corps de réglage de direction de buse (101); et
S50: répéter les étapes S10 à S40 jusqu'à ce que la direction de projection du jet (301) de la buse (103) soit correcte.
